Europäisches Patentamt

European Patent Office

Office européen des brevets

(19)

(11) Numéro de publication: **0 156 705**
**B1**

(12)

# FASCICULE DE BREVET EUROPEEN

(45) Date de publication du fascicule du brevet:
**16.09.87**

(51) Int. Cl.⁴: **B 60 G 11/18**

(21) Numéro de dépôt: **85400409.0**

(22) Date de dépôt: **04.03.85**

(54) Suspension à bras oscillants pour un train de deux roues d'un véhicule et ensemble de tubes parallèles pour une telle suspension.

(30) Priorité: **08.03.84 FR 8403603**

(43) Date de publication de la demande:
**02.10.85 Bulletin 85/40**

(45) Mention de la délivrance du brevet:
**16.09.87 Bulletin 87/38**

(84) Etats contractants désignés:
**DE GB IT SE**

(56) Documents cités:
**EP - A - 0 034 531**
**EP - A - 0 097 540**
**DE - C - 920 291**
**DE - U - 1 904 380**
**FR - A - 1 145 368**
**FR - A - 1 539 129**
**FR - A - 1 553 141**
**FR - A - 2 023 635**
**FR - A - 2 393 690**
**FR - A - 2 486 461**

(73) Titulaire: **AEROSPATIALE Société Nationale Industrielle, 37, Boulevard de Montmorency, F-75781 Paris Cédex 16 (FR)**

(72) Inventeur: **Aubry, Jacques, 2 avenue Marie Gasquet, F-13480 Cabries (FR)**
Inventeur: **Bonfils, Michel, Chemin de la Mer, F-13760 St. Cannat (FR)**
Inventeur: **Merlet, Jean-Paul, Villa Treize Etoiles Legassin, F-13120 Mimet (FR)**

(74) Mandataire: **Bonnetat, Christian et al, Cabinet PROPI Conseils 23 rue de Léningrad, F-75008 Paris (FR)**

## Description

La présente invention concerne une suspension pour un train de deux roues d'un véhicule, comprenant deux bras oscillant autour d'un axe transversal audit véhicule et portant chacun l'une desdites roues, et un ensemble de tubes d'axes parallèles audit axe transversal et réalisés en matière composite fibres-matière synthétique (EP-A-97 540). La suspension conforme à l'invention est tout particulièrement, quoique non exclusivement, appropriée à être utilisées comme suspension arrière d'un véhicule automobile du type à traction avant.

Selon l'invention, la suspension est remarquable en ce que ledit ensemble comporte un premier tube solidaire du châssis dudit véhicule à chacune de ses extrémités et autour duquel chacun desdits bras peut pivoter, ainsi qu'au moins deux seconds tubes solidarisés à chacune de leurs extrémités de l'un desdits bras, ledit premier tube et lesdits seconds tubes étant solidaires les uns des autres en leurs milieux.

On voit ainsi que la raideur verticale de la suspension est assurée, pour chaque bras de suspension, par les deux moitiés desdits seconds tubes associés et par la moitié dudit premier tube montée en série avec celles-ci, lesdits seconds tubes étant sollicités en torsion et flexion alors que ledit premier tube est sollicité en torsion. On remarquera de plus que lesdits seconds tubes reliants les deux bras de suspension assurent la raideur anti-devers et que ces seconds tubes forment une poutre assurant le guidage des roues en pincement et en carrossage.

Le fait de réaliser lesdits tubes en matière composite fibres-résine synthétique permet d'obtenir pour ceux-ci des caractéristiques mécaniques correspondant aux fonctions qu'ils remplissent et qu'il serait impossible d'obtenir avec des tubes d'acier, à dimensionnement et poids comparables. Grâce à la présente invention on peut donc réaliser une suspension qui, tout en étant simple, est légère, de sorte qu'elle permet d'obtenir un gain sur le poids total du véhicule, et donc sur sa consommation en carburant.

De préférence, lesdits seconds tubes sont identiques et sont disposés de façon symétrique par rapport audit premier tube.

Dans un mode de réalisation avantageux, pour répartir de façon adéquate les raideurs de guidage en pincement et en carrossage, le plan contenant les trois axes desdits premier et second tubes est incliné par rapport à la verticale et ce plan s'élève de l'arrière vers l'avant du véhicule.

L'articulation desdits bras de suspension autour des extrémités dudit premier tube est avantageusement réalisées au moyen de paliers élastomériques, permettant de plus un débattement et un amortissement longitudinaux pour les rouses.

Au moins lesdits seconds tubes peuvent présenter une section polygonale et chacun desdits bras de suspension peut être constitué de deux coques pressant entre elles lesdits seconds tubes pour assurer la solidarisation entre ceux-ci et lesdits bras.

De préférence, les extrémités dudit premier tube sont rendues solidaires de pattes de fixation susceptibles d'être elles-mêmes solidarisées dudit châssis. Chaque bras de suspension peut comporter un manchon transversal creux traversé par l'extrémité correspondante dudit premier tube et à la périphérie duquel les seconds tubes sont solidarisés du bras de suspension associé.

Avantageusement, chaque patte de fixation comporte une aile au moins approximativement verticale pour l'articulation d'un amortisseur, relié par ailleurs au bras de suspension associé.

La présente invention concerne également un ensemble de tubes d'axes parallèles réalisés en matière composite fibres-matière synthétique, destiné à la suspension d'un train de deux roues d'un véhicule, comprenant deux bras oscillant autour d'un axe X-X transversal audit véhicule et portant chacun l'une desdites roues, cet ensemble étant remarquable en ce qu'il comporte un premier tube destiné à être rendu solidaire du châssis dudit véhicule et à servir d'arbre pour deux bras de suspension, ainsi qu'au moins deux seconds tubes destinés à être rendus solidaires à chacune de leurs extrémités de l'un desdits bras, ledit premier tube et lesdits seconds tubes étant solidaires les uns des autres en leurs milieux.

Les figures du dessin annexé feront bien comprendre comment l'invention peut être réalisée. Sur ces figures, des références identiques désignent des éléments semblables.

La fig. 1 est une vue de dessus schématique d'une suspension arrière pour véhicule, conforme à l'invention.

La fig. 2 est une vue latérale d'un mode de réalisation avantageux de la suspension arrière de la fig. 1.

La fig. 3 est, pour partie, une coupe horizontale selon la ligne III-III de la fig. 2 et, pour partie, une vue de dessus du mode de réalisation de la fig. 2.

Les figures 4 et 5 sont respectivement des coupes selon les lignes IV-IV et V-V de la fig. 3.

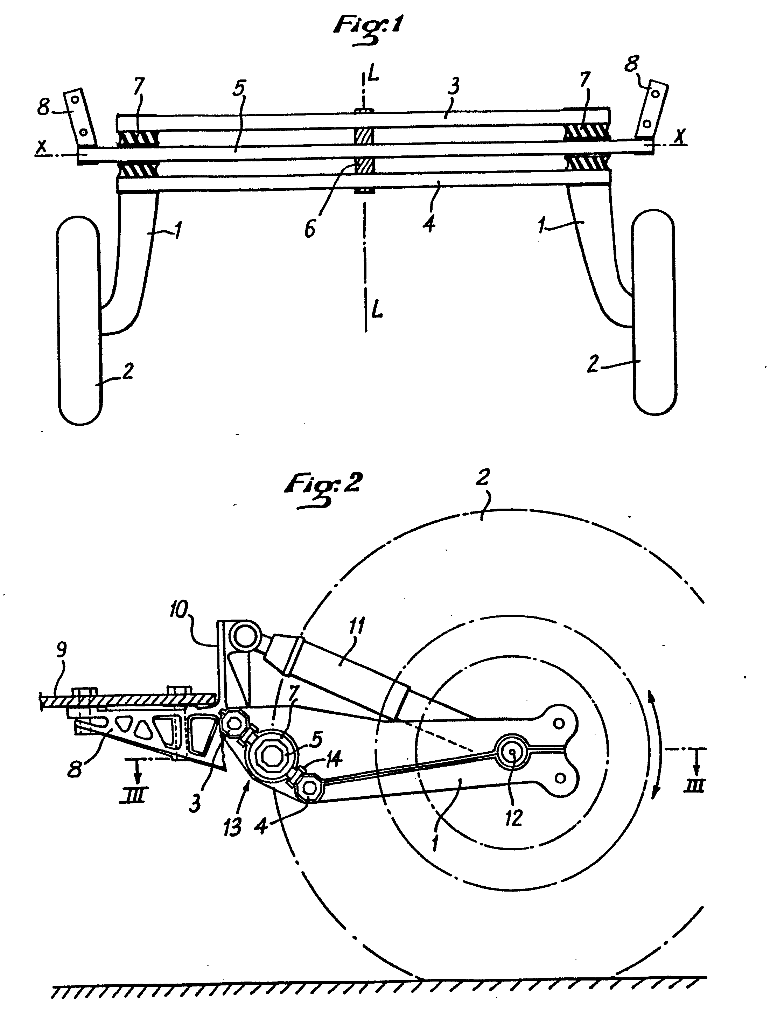

La suspension arrière selon l'invention, montrée schématiquement sur la fig. 1, est du type dit «à roue tirée», c'est-à-dire comporte deux bras de suspension 1, articulés à leur partie avent sur le châssis du véhicule autour d'un axe X-X et pourvus des roues 2 à leur partie arrière. Elle comporte deux barres 3 et 4 parallèles, disposées transversalement à l'axe longitudinal L-L du véhicule sur lequel est montée ladite suspension et susceptibles des déformations élastiques de torsion et de flexion. Chacune des barres 3 et 4 est solidaire, par son extrémité correspondante, d'un côté du bras de suspension 1 gauche, de l'autre du bras de suspension 1 droit.

Entre les barres 3 et 4 est disposée une barre 5, parallèle à ces barres et solidaires de celles-ci en leur milieu, grâce à une entretoise de solidarisation médiane 6. A ses extrémités, la barre intermédiaire 5 ist en appui (et non pas fixée) sur les deux bras de suspension 1, par l'intermédiaire de paliers 7, par exemple du type élastomérique. De plus, également à ses extrémités, la barre intermédiaire 5 encastrée, sur le châssis du véhicule, par l'intermédiaire de pattes ou ferrures de reprise d'effort 8.

L'axe de la barre 5 est confondu avec l'axe X-X de pivotement des bras 1, de sorte que ceux-ci pivotent autour de ladite barre.

On voit ainsi que, dans la suspension conforme à la présente invention:

— la raideur verticale pour les oscillations verticales d'un bras de suspension 1 est assurée par l'ensemble des deux demi-barres 3 et 4 liées audit bras 1 et de la demi-barre 5 liée au châssis et montée en série avec les deux précédentes, les barres 3 et 4 étant sollicitées en torsion et flexion, tandis que la barre 5 est sollicitée en torsion;

— la raideur anti-devers est assurée par les deux barres 3 et 4 reliant les deux bras de suspension 1 et sollicitées en torsion et flexion dans le plan vertical;

— le guidage du train des roues 2 en pincement et carrossage est assuré par la poutre constituée des deux barres 3 et 4, sollicitées en flexion dans le plan horizontal;

— les paliers élastomériques 7 assurent le filtrage longitudinal des oscillations des bras de suspension 1.

Comme on le verra ci-après, des amortisseurs de tout type peuvent assurer l'amortissement vertical.

De préférence, les trois barres 3, 4 et 5 sont constituées par des tubes réalisés en une matière composite constituée de fibres (de verre, de carbone, de bore etc... ou d'un mélange de ces matières) enrobées d'une résine synthétique, par la mise en oeuvre de tout procédé connu (bobinage filamentaire, superposition de tresses, tissage, etc...) permettant d'obtenir pour lesdits tubes des valeurs élevées du rapport R/E, dans lequel R est la contrainte à la rupture et E le module d'élasticité.

Comme on le verra ci-après, ces tubes peuvent présenter un contour extérieur polygonal. Les encastrements de tels tubes peuvent être obtenus par collage, par friction, par voie mécanique, par emmanchement de sections polygonales, etc...

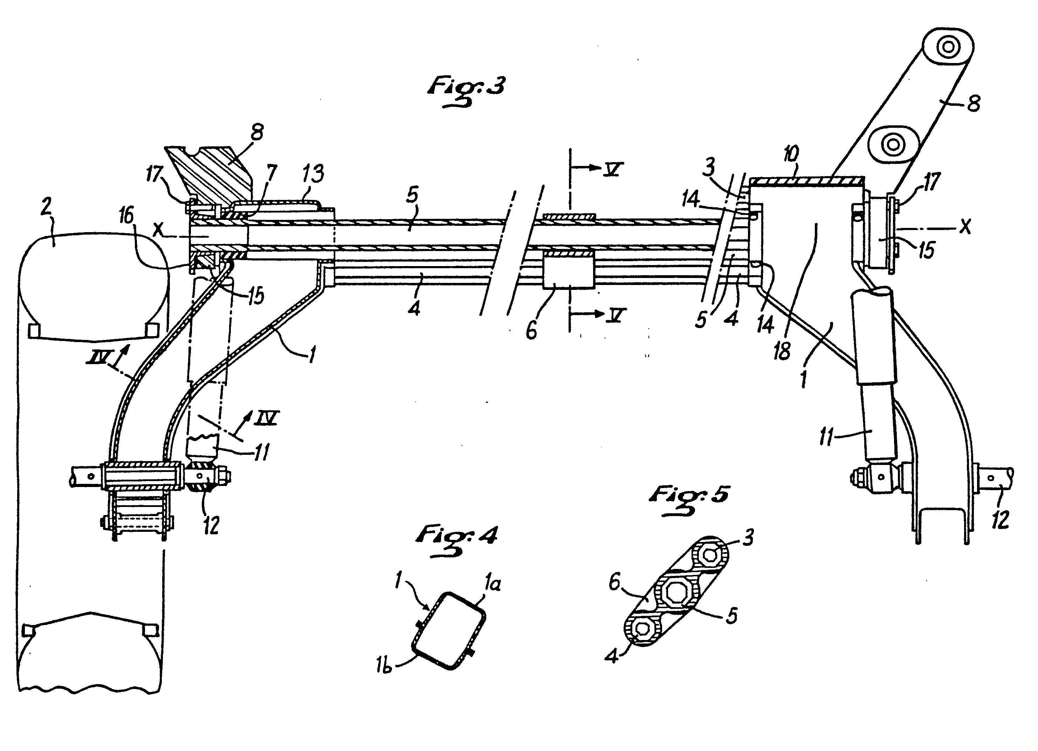

Sur la fig. 2, qui représente avec les figures 3, 4 et 5, un mode de réalisation pratique de la suspension de la fig. 1, on a illustré la fixation des pattes ou ferrures de reprise 8 sur le châssis 9 du véhicule et montré que ces ferrures 8 comportent des bras verticaux 10, permettant d'accrocher et d'articuler des amortisseurs 11, par exemple hydrauliques, reliés par ailleurs aux axes 12 des roues 2.

Comme le montre les figures 2, 3 et 4, les barres 3, 4 et 5 présentent une section polygonale constante (octogonale sur les dessins). Elles sont réalisées en fibres résistantes enrobées de résine durcissable. Chacun des bras 1 est constitué de deux coques de tôle pliée ou de stratifié fibres-résine 1a et 1b et comporte, à sa partie avant, un manchon 13 traversé par la barre 5 et rendu solidaire à sa périphérie des barres 3 et 4, pressées et serrées entre lesdites coques 1a et 1b par les vis de serrage 14. Les extrémités de la barre 5 saillant à l'extérieur du manchon 13 sont solidarisées d'une patte de reprise 8 par friction. A cet effet, chaque patte 8 comporte une bague 15 enserrant l'extrémité correspondante de la barre 5 et coopérant avec une bride 16 et des vis de serrage 17, pour, par effet de coin, solidariser ladite bride 16 de ladite extrémité. Les paliers élastomériques 7 sont maintenus entre les coques 1a et 1b et assurent l'appui traversant de la barre 5 à travers le manchon 13.

Les barres 3 et 4 sont identiques entre elles et sont disposées symétriquement par rapport à la barre 5. Le plan des axes des barres 3, 4 et 5 est incliné par rapport à la verticale et s'élève de l'arrière vers l'avant du véhicule, de façon à rigidifier le guidage des roues à la fois en pincement et en carrossage.

**Revendications**

1. Suspension pour un train de deux roues (2) d'un véhicule comprenant deux bras (1) oscillant autour d'un axe X-X transversal audit véhicule et portant chacun l'une desdites roues (2) et un ensemble de tubes d'axes parallèles audit axe transversal X-X faisant chacun office de ressort, et réalisés en matière composite fibres-matière synthétique, caractérisée en ce que ledit ensemble comporte un premier tube (5) solidaire du châssis dudit véhicule à chacune de ses extrémités et autour duquel chacun desdits bras (1) peut pivoter, ainsi qu'au moins deux seconds tubes (3, 4) extérieurs l'un à l'autre et audit premier tube et solidaires à chacune de leurs extrémités de l'un desdits bras (2), ledit premier tube et lesdits seconds tubes étant solidaires les uns des autres en leurs milieux.

2. Suspension selon la revendication 1, caractérisée en ce que lesdits seconds tubes (3, 4) sont identiques et sont disposés de façon symétrique par rapport audit premier tube (5).

3. Suspension selon la revendication 2, caractérisée en ce que le plan contenant les trois axes desdits premier et seconds tubes est incliné par rapport à la verticale.

4. Suspension selon la revendication 3, caractérisée en ce que ledit plan contenant les trois axes s'élève de l'arrière vers l'avant du véhicule.

5. Suspension selon la revendication 1, caractérisée en ce que l'articulation desdits bras de suspension (1) autour des extrémités dudit premier tube (5) est réalisée au moyen de paliers élastomériques (7).

6. Suspension selon la revendication 1, dans laquelle au moins lesdits seconds tubes (3, 4) présentent une section polygonale, caractérisée en ce que chacun desdits bras de suspension (1) est constitué de deux coques (1a, 1b) pressant entre elles lesdits seconds tubes (3, 4) pour assurer la solidarisation entre ceux-ci et lesdits bras.

7. Suspension selon la revendication 1, caractérisée en ce que les extrémités dudit premier tube (5) sont rendues solidaires de pattes de fixation (8), susceptible d'être elles-mêmes solidarisées dudit châssis (9).

8. Suspension selon la revendication 1, caractérisée en ce que chaque bras de suspension (1) comporte un manchon transversal creux traversé par l'extrémité correspondante dudit premier tube (5) et à la périphérie duquel les seconds tubes (3, et 4) sont solidarisés du bras de suspension (1) associé.

9. Suspension selon la revendication 7, caractérisée en ce que chaque patte de fixation (8) comporte une aile (10) au moins approximativement verticale pour l'articulation d'un amortisseur (11), relié par ailleurs au bras de suspension (1) associé.

10. Ensemble de tubes d'axes parallèles faisant chacun office de ressort, réalisés en matière composite fibres-matière synthétique, destiné à la suspendion d'un train de deux roues (2) d'un véhicule,

5    0 156 705    6

comprenant deux bras (1) oscillant autour d'un axe X-X transversal audit véhicule et portant chacun l'une desdites roues, caractérisé en ce qu'il comporte un premier tube (5) destiné à être rendu solidaire du châssis (9) dudit véhicule et à servir d'arbre pour deux bras de suspension (1), ainsi qu'au moins deux seconds tubes (3, 4) destinés à être disposés extérieurement l'un à l'autre et audit premier tube et à être rendus solidaires à chacune de leurs extrémités de l'un desdis bras, ledit premier tube et lesdits seconds tubes étant solidaires les uns des autres en leurs milieux

## Patantansprüche

1. Aufhängung für einen Satz zweier Räder (2) eines Fahrzeugs mit zwei um eine Querachse X-X am Fahrzeug pendelnden Armen (1), die jeweils eines der Räder (2) tragen, und mit einer Anordnung von zu der Querachse X-X parallelen Achsrohren, die jeweils zur Federung dienen und die aus Fiber-Kunststoff-Verbundmaterial hergestellt sind, dadurch gekennzeichnet, dass die Anordung von Achsrohren ein erstes, fest mit dem Chassis des Fahrzeugs an beiden Enden verbundenes Rohr (5) umfasst, um das jeder der beiden Arme (1) sich drehen kann, sowie mindestens zwei zweite Rohre (3, 4) die ausserhalb zueinander und zum ersten Rohr angebracht sind und mit jedem ihrer Enden fest mit einem der Arme (1) verbunden sind, wobei das erste Rohr und die zweiten Rohre jeweils an ihren Mitten miteinander fest verbunden sind.

2. Aufhängung nach Anspruch 1, dadurch gekennzeichnet, dass die zweiten Rohre (3, 4) identisch sind und symmetrisch zum ersten Rohr (5) angeordnet sind.

3. Aufhängung nach Anspruch 2, dadurch gekennzeichnet, dass die die drei Achsen des ersten und der zweiten Rohre enthaltende Ebene gegen die Vertikale geneigt ist.

4. Aufhängung nach Anspruch 3, dadurch gekennzeichnet, dass die die drei Achsen enthaltende Ebene im Fahrzeug von hinten nach vorne ansteigt.

5. Aufhängung nach Anspruch 1, dadurch gekennzeichnet, dass das Gelenk der Aufhängungsarme (1) und die Enden des ersten Rohrs (5) mittels elastomerer Lager (7) ausgeführt ist.

6. Aufhängung nach Anspruch 1, wobei wenigstens die zweiten Rohre (3, 4) einen Vieleckquerschnitt aufweisen, dadurch gekennzeichnet, dass jeder Aufhängungsarm (1) aus zwei Schalen (1a, 1b) besteht, die zwischen sich die zweiten Rohre (3, 4) einpressen, um somit die Festigkeit zwischen diesen und den Armen (1) sicherzustellen.

7. Aufhängung nach Anspruch 1, dadurch gekennzeichnet, dass die Enden des ersten Rohrs (5) fest mit Befestigungsteilen (8) verbunden sind, welche wiederum mit dem Chassis (9) fest verbunden sind.

8. Aufhängung nach Anspruch 1, dadurch gekennzeichnet, dass jeder Aufhängungsarm (1) eine hohle Querbuchse aufweist, durch die das betreffende Ende des ersten Rohrs hindurchläuft und an deren Umfang die zweiten Rohre (3, 4) fest mit dem zugehörigen Aufhängungsarm (1) verbunden sind.

9. Aufhängung nach Anspruch 7, dadurch gekennzeichnet, dass jedes Befestigungsteil (8) einen wenigstens in etwa vertikalen Flügel (10) zur Anlenkung eines andererseits mit dem zugehörigen Aufhängungsarm (1) verbundenen Stossdämpfers (11) aufweist.

10. Anordung von parallelen Achsrohren, die jeweils zur Federung dienen und die aus Fiber-Kunststoff-Verbundmaterial hergestellt sind, wobei diese Anordnung zur Aufhängung für einen Satz zweier Räder (2) eines Fahrzeugs dienen, mit zwei um eine Querachse X-X am Fahrzeug pendelnden Armen (1), die jeweils eines der Räder tragen, dadurch gekennzeichnet, dass sie ein erstes Rohr (5) umfasst, das fest mit dem Chassis (9) des Fahrzeugs verbunden ist und als Achse für die beiden Aufhängungsarme (1) dient, sowie wenigstens zwei zweite Rohre (3, 4), die ausserhalb zueinander und zum ersten Rohr angebracht sind und mit jedem ihrer Enden fest mit einem der Arme verbunden sind, wobei das erste Rohr und die zweiten Rohre jeweils an ihren Mitten miteinander fest verbunden sind.

## Claims

1. Suspendion for a two-wheeled undercarriage of a vehicle comprising two arms (1) pivotable about an axis X-X transversal to said vehicle, each arm carrying one wheel (2) and an assebly of tubes of axes parallel to said transversal axis X-X each acting as a spring and made of a composite material of fibers and synthetic material, characterized in that said assembly comprises a first tube (5) intergral with the vehicle chassis by each of its ends and about which tube each of said arms (1) can pivot, as well as at least two second tubes (3, 4) outside each other and said first tube and integral with one of said arms (1) at each of their ends, said first tube and said second tubes being interconnected in their middle parts.

2. Suspension as claimed in claim 1, characterized in that said second tubes (3, 4) are identical and arranged symmetrically with respect to said first tube (5).

3. Suspension as claimed in claim 2, characterized in that the plane containing the axes of said first and second tubes is inclined with respect to the vertical.

4. Suspension as claimed in claim 3, characterized in that said plane containing the three axex rises from the back towards the front of the vehicle.

5. Suspension as claimed in claim 1, characterized in that the articulation of said suspension arms (1) on the ends of said first tube (5) is achieved by means of elastomeric bearing (7).

6. Suspension as claimed in claim 1, in which at least said second tubes (3, 4) have a polygonal cross-section, characterized in that each of said suspension arms (1) is constituted of wo shells (1a, 1b) squeezing between them the said second tubes (3, 4) to achieve interconnection of said tubes with said arms.

7. Suspension as claimed in claim 1, characterized in that the ends of said first tube (5) are joined to fastening tabs (8) adapted to be in turn fastened to said chassis (9).

4

8. Suspension as claimed in claim 1, characterized in that each suspension arm (1) comprises a hollow transversal sleeve crossed through by the corresponding end of said first tube (5) and on the periphery of which the second tubes (3 and 4) are connected to the associated suspension arm (1).

9. Suspension as claimed in claim 7, characterized in that each fastening tab (8) comprises a wing member (10) which is at least approximately vertical for the hinged connection of a shock-absorber (11) which is also connected to the associated suspension arm (1).

10. Assembly of tubes of parallel axes each acting as a spring made in composite material of fibers and synthetic material, designed for the suspension of a two-wheeled undercarriage of a vehicle, comprising two arms (1) pivotable about an axis X-X transversal to said vehicle, each arm carrying one wheel (2), characterized in that said assembly comprises a first tube (5) designed to be joined to the vehicle chassis (9) and to act as a shaft for two suspension arms (1), and at least two second tubes (3, 4), designed to be arranged outside each other and said first tube and to be joined at each of their ends with one of said arms, said first tube and said second tubes being interconnected in their middle parts.

Fig. 1

Fig. 2

Fig.3

Fig.4

Fig.5